(19) Europäisches Patentamt
European Patent Office
Office européen des brevets

(11) **EP 4 495 669 A1**

(12) **EUROPEAN PATENT APPLICATION**
published in accordance with Art. 153(4) EPC

(43) Date of publication:
**22.01.2025 Bulletin 2025/04**

(21) Application number: **23770585.0**

(22) Date of filing: **08.03.2023**

(51) International Patent Classification (IPC):
***G02B 27/02*** *(2006.01)* ***G02B 5/30*** *(2006.01)*

(52) Cooperative Patent Classification (CPC):
**G02B 5/30; G02B 27/02**

(86) International application number:
**PCT/JP2023/008814**

(87) International publication number:
**WO 2023/176629 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:
**14.03.2022 JP 2022039285**
**14.03.2022 JP 2022039286**
**10.05.2022 JP 2022077631**
**10.05.2022 JP 2022077632**
**10.05.2022 JP 2022077633**
**10.05.2022 JP 2022077634**
**10.05.2022 JP 2022077657**
**10.05.2022 JP 2022077658**
**10.05.2022 JP 2022077659**
**10.05.2022 JP 2022077676**
**10.05.2022 JP 2022077677**
**10.05.2022 JP 2022077678**
**10.05.2022 JP 2022077679**
**28.12.2022 JP 2022212218**

(71) Applicant: **Nitto Denko Corporation**
**Ibaraki-shi, Osaka 567-8680 (JP)**

(72) Inventors:
- **KOJIMA Tadashi**
  **Ibaraki-shi, Osaka 567-8680 (JP)**
- **KITANO Kohei**
  **Ibaraki-shi, Osaka 567-8680 (JP)**
- **GOTO Shusaku**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **OPTICAL LAMINATE, LENS PORTION, AND DISPLAY METHOD**

(57) Provided is an optical laminate that can achieve a reduction in weight of a pair of VR goggles and an improvement in viewability thereof. The optical laminate according to an embodiment of the present invention is an optical laminate including: a laminate film **(31)** including a substrate and a surface-treated layer; and a retardation member **(22),** wherein the substrate of the laminate film and the retardation member are arranged adjacent to each other, wherein the retardation member includes a first retardation layer **(22a),** an adhesive layer **(50),** and a second retardation layer **(22b)** in the stated order, and wherein the adhesive layer has a thickness of 0.5 um or more and 1.3 μm or less.

FIG. 2

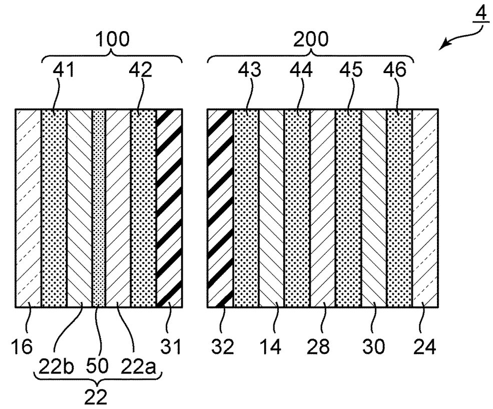


EP 4 495 669 A1

## Description

### Technical Field

The present invention relates to an optical laminate, a lens unit, and a display method.

### Background Art

Image display apparatus typified by a liquid crystal display apparatus and an electroluminescence (EL) display apparatus (e.g., an organic EL display apparatus) have been rapidly gaining more widespread use. In the image display apparatus, an optical member, such as a polarizing member or a retardation member, has been generally used for achieving image display and improving the performance of the image display (see, for example, Patent Literature 1).

In recent years, new applications of the image display apparatus have been developed. For example, a pair of goggles (VR goggles) with a display for achieving virtual reality (VR) has started to be commercialized. A reduction in weight of the pair of VR goggles, an improvement in viewability thereof, and the like have been desired because an investigation has been made on the utilization of the pair of VR goggles in various fields. The weight reduction may be achieved by, for example, thinning a lens to be used in the pair of VR goggles. Meanwhile, the development of an optical member suitable for a display system using a thin lens has also been desired.

### Citation List

### Patent Literature

[PTL 1] JP 2021-103286 A

### Summary of Invention

### Technical Problem

In view of the foregoing, a primary object of the present invention is to provide an optical laminate that can achieve a reduction in weight of a pair of VR goggles and an improvement in viewability thereof.

### Solution to Problem

1. According to one embodiment of the present invention, there is provided an optical laminate, including: a laminate film including a substrate and a surface-treated layer; and a retardation member, wherein the substrate of the laminate film and the retardation member are arranged adjacent to each other, wherein the retardation member includes a first retardation layer, an adhesive layer, and a second retardation layer in the stated order, and wherein the adhesive layer has a thickness of 0.5 um or more and 1.3 um or less.

2. The optical laminate according to the above-mentioned item 1 may have a laminate smoothness of 0.7 arcmin or less.

3. In the optical laminate according to the above-mentioned item 1 or 2, the adhesive layer may be a cured layer of a resin.

4. In the optical laminate according to any one of the above-mentioned items 1 to 3, the laminate film may have a surface smoothness of 0.5 arcmin or less.

5. In the optical laminate according to any one of the above-mentioned items 1 to 4, the substrate of the laminate film may contain a (meth)acrylic resin.

6. In the optical laminate according to any one of the above-mentioned items 1 to 5, the surface-treated layer of the laminate film may have an antireflection function.

7. In the optical laminate according to any one of the above-mentioned items 1 to 6, the first retardation layer may show

a refractive index characteristic of nx>ny≥nz and may satisfy a relationship of Re(450)<Re(550)<Re(650).

8. In the optical laminate according to any one of the above-mentioned items 1 to 7, the second retardation layer may show a refractive index characteristic of nz>nx≥ny.

9. The optical laminate according to any one of the above-mentioned items 1 to 8 may have a Y value of a single layer transmittance subjected to visibility correction of 93% or more.

10. According to one embodiment of the present invention, there is provided a lens unit to be used in a display system configured to display an image to a user, the lens unit including: a reflection-type polarizing member configured to reflect light, which has been emitted toward a front side from a display surface of a display element configured to display the image, and has passed through a polarizing member and a first λ/4 member; a first lens portion arranged on an optical path between the display element and the reflection-type polarizing member; a half mirror arranged between the display element and the first lens portion, the half mirror being configured to transmit the light emitted from the display element and to reflect the light reflected by the reflection-type polarizing member toward the reflection-type polarizing member; a second lens portion arranged on the front side of the reflection-type polarizing member; and the optical laminate of any one of the above-mentioned items 1 to 9 arranged on an optical path between the half mirror and the reflection-type polarizing member.

11. According to one embodiment of the present invention, there is provided a display method, including the steps of: passing light representing an image, which has been emitted through a polarizing member and a first λ/4 member, through a half mirror and a first lens portion; passing the light, which has passed through the half mirror and the first lens portion, through the optical laminate of any one of the above-mentioned items 1 to 9; reflecting the light, which has passed through the optical laminate, toward the half mirror with a reflection-type polarizing member; enabling the light, which has been reflected by the reflection-type polarizing member and the half mirror, to penetrate through the reflection-type polarizing member with the optical laminate; and passing the light, which has penetrated through the reflection-type polarizing member, through a second lens portion.

## Advantageous Effects of Invention

According to the optical laminate of the embodiment of the present invention, the reduction in weight of the pair of VR goggles and the improvement in viewability thereof can be achieved.

## Brief Description of Drawings

FIG. 1 is a schematic view for illustrating the schematic configuration of a display system according to one embodiment of the present invention.

FIG. 2 is a schematic sectional view for illustrating an example of details of a lens unit in the display system illustrated in FIG. 1.

FIG. 3 is a schematic perspective view for illustrating an example of a multilayer structure in a reflection-type polarizing film.

## Description of Embodiments

Embodiments of the present invention are described below with reference to the drawings. However, the present invention is not limited to these embodiments. For clearer illustration, some widths, thicknesses, shapes, and the like of respective portions may be schematically illustrated in the drawings in comparison to the embodiments. However, the widths, the thicknesses, the shapes, and the like are each merely an example, and do not limit the understanding of the present invention. In addition, in the drawings, the same components or equivalent components may be denoted by the same reference symbols, and duplicate descriptions thereof may be omitted.

(Definitions of Terms and Symbols)

The definitions of terms and symbols used herein are as described below.

(1) Refractive Indices (nx, ny, and nz)

"nx" represents a refractive index in a direction in which an in-plane refractive index is maximum (that is, slow axis direction), "ny" represents a refractive index in a direction perpendicular to a slow axis in a plane (that is, fast axis direction), and "nz" represents a refractive index in a thickness direction.

(2) In-plane Retardation (Re)

"Re(λ)" refers to an in-plane retardation measured at 23°C with light having a wavelength of λ nm. For example, "Re(550)" refers to an in-plane retardation measured at 23°C with light having a wavelength of 550 nm. The Re(λ) is determined from the equation "Re(λ)=(nx-ny)×d" when the thickness of a layer (film) is represented by "d" (nm).

(3) Thickness Direction Retardation (Rth)

"Rth(λ)" refers to a thickness direction retardation measured at 23°C with light having a wavelength of λ nm. For example, "Rth(550)" refers to a thickness direction retardation measured at 23°C with light having a wavelength of 550 nm. The Rth(λ) is determined from the equation "Rth(λ)=(nx-nz)×d" when the thickness of a layer (film) is represented by "d" (nm).

(4) Nz Coefficient

An Nz coefficient is determined from the equation "Nz=Rth/Re" .

(5) Angle

When reference is made to an angle herein, the angle encompasses both angles in a clockwise direction and a counterclockwise direction with respect to a reference direction. Accordingly, for example, the term "45°" means ±45°.
FIG. **1** is a schematic view for illustrating the schematic configuration of a display system according to one embodiment of the present invention. The arrangement, shapes, and the like of the respective constituents of a display system **2** are schematically illustrated in FIG. **1.** The display system **2** includes a display element **12,** a reflection-type polarizing member **14,** a first lens portion **16,** a half mirror **18,** a first retardation member **20,** a second retardation member **22,** and a second lens portion **24.** The reflection-type polarizing member **14** is arranged on a front side of the display element **12,** that is, on the display surface **12a** side thereof, and can reflect light emitted from the display element **12.** The first lens portion **16** is arranged on an optical path between the display element **12** and the reflection-type polarizing member **14,** and the half mirror **18** is arranged between the display element **12** and the first lens portion **16.** The first retardation member **20** is arranged on an optical path between the display element **12** and the half mirror **18,** and the second retardation member **22** is arranged on an optical path between the half mirror **18** and the reflection-type polarizing member **14.**
The half mirror or the first lens portion and the constituents arranged on the front side thereof (in the illustrated example, the half mirror **18,** the first lens portion **16,** the second retardation member **22,** the reflection-type polarizing member **14,** and the second lens portion **24**) are sometimes collectively referred to as "lens unit (lens unit **4**)."
The display element **12** is, for example, a liquid crystal display or an organic EL display, and has a display surface **12a** for displaying an image. The light to be emitted from the display surface **12a** passes through, for example, a polarizing member (typically, a polarizing film) that may be incorporated into the display element **12** to be emitted as first linearly polarized light.
The first retardation member **20** includes a first λ/4 member that can convert the first linearly polarized light, which has entered the first retardation member **20,** into first circularly polarized light. When the first retardation member is free of any member other than the first λ/4 member, the first retardation member may correspond to the first λ/4 member. The first retardation member **20** may be arranged integrally with the display element **12.**
The half mirror **18** transmits the light emitted from the display element **12,** and reflects the light reflected by the reflection-type polarizing member **14** toward the reflection-type polarizing member **14.** The half mirror **18** is arranged integrally with the first lens portion **16.**
The second retardation member **22** includes a second λ/4 member that can cause the light, which has been reflected by the reflection-type polarizing member **14** and the half mirror **18,** to penetrate through the reflection-type polarizing member **14.** When the second retardation member is free of any member other than the second λ/4 member, the second retardation member may correspond to the second λ/4 member. The second retardation member **22** may be arranged integrally with the first lens portion **16.**
The first circularly polarized light emitted from the first λ/4 member in the first retardation member **20** passes

through the half mirror **18** and the first lens portion **16,** and is converted into second linearly polarized light by the second λ/4 member in the second retardation member **22.** The second linearly polarized light emitted from the second λ/4 member is reflected toward the half mirror **18** without penetrating through the reflection-type polarizing member **14.** At this time, the polarization direction of the second linearly polarized light that has entered the reflection-type polarizing member **14** is the same direction as that of the reflection axis of the reflection-type polarizing member **14.** Accordingly, the second linearly polarized light that has entered the reflection-type polarizing member **14** is reflected by the reflection-type polarizing member **14.**

The second linearly polarized light reflected by the reflection-type polarizing member **14** is converted into second circularly polarized light by the second λ/4 member in the second retardation member **22,** and the second circularly polarized light emitted from the second λ/4 member passes through the first lens portion **16,** and is reflected by the half mirror **18.** The second circularly polarized light reflected by the half mirror **18** passes through the first lens portion **16,** and is converted into third linearly polarized light by the second λ/4 member in the second retardation member **22.** The third linearly polarized light penetrates through the reflection-type polarizing member **14.** At this time, the polarization direction of the third linearly polarized light that has entered the reflection-type polarizing member **14** is the same direction as that of the transmission axis of the reflection-type polarizing member **14.** Accordingly, the third linearly polarized light that has entered the reflection-type polarizing member **14** penetrates through the reflection-type polarizing member **14.**

The light that has penetrated through the reflection-type polarizing member **14** passes through the second lens portion **24** to enter an eye **26** of a user.

For example, the absorption axis of the polarizing member in the display element **12** and the reflection axis of the reflection-type polarizing member **14** may be arranged substantially parallel to each other, or may be arranged substantially perpendicular to each other. An angle formed by the absorption axis of the polarizing member in the display element **12** and the slow axis of the first λ/4 member in the first retardation member **20** is, for example, from 40° to 50°, and may be from 42° to 48°, or may be about 45°. An angle formed by the absorption axis of the polarizing member in the display element **12** and the slow axis of the second λ/4 member in the second retardation member **22** is, for example, from 40° to 50°, and may be from 42° to 48°, or may be about 45°.

The in-plane retardation Re(550) of the first λ/4 member is, for example, from 100 nm to 190 nm, and may be from 110 nm to 180 nm, may be from 130 nm to 160 nm, or may be from 135 nm to 155 nm. The first λ/4 member preferably shows such a reverse wavelength dispersion characteristic that its retardation value increases with an increase in wavelength of measurement light. The first λ/4 member preferably satisfies the relationship of Re(450)<Re(550)<Re(650). The ratio "Re(450)/Re(550)" of the first λ/4 member is, for example, 0.75 or more and less than 1, and may be 0.8 or more and 0.95 or less.

The in-plane retardation Re(550) of the second λ/4 member is, for example, from 100 nm to 190 nm, and may be from 110 nm to 180 nm, may be from 130 nm to 160 nm, or may be from 135 nm to 155 nm. The second λ/4 member preferably shows such a reverse wavelength dispersion characteristic that its retardation value increases with an increase in wavelength of measurement light. The second λ/4 member preferably satisfies the relationship of Re(450)<Re(550) <Re(650). The ratio "Re(450)/Re(550)" of the second λ/4 member is, for example, 0.75 or more and less than 1, and may be 0.8 or more and 0.95 or less.

In the lens unit **4,** a space may be formed between the first lens portion **16** and the second lens portion **24.** In this case, a member to be arranged between the first lens portion **16** and the second lens portion **24** is preferably arranged integrally with one of the first lens portion **16** or the second lens portion **24.** For example, the member to be arranged between the first lens portion **16** and the second lens portion **24** is preferably integrated with one of the first lens portion **16** or the second lens portion **24** via an adhesion layer. According to such form, for example, the handleability of each member can be excellent. The adhesion layer may be formed from an adhesive, or may be formed from a pressure-sensitive adhesive. Specifically, the adhesion layer may be an adhesive layer or a pressure-sensitive adhesive layer. The thickness of the adhesion layer is, for example, from 0.05 um to 30 μm.

FIG. **2** is a schematic sectional view for illustrating an example of details of a lens unit in the display system illustrated in FIG. **1.** Specifically, FIG. **2** is an illustration of a first lens portion, a second lens portion, and members to be arranged therebetween. The lens unit **4** includes the first lens portion **16,** a first laminate portion **100** arranged adjacent to the first lens portion **16,** the second lens portion **24,** and a second laminate portion **200** arranged adjacent to the second lens portion **24.** In the example illustrated in FIG. **2,** the first laminate portion **100** and the second laminate portion **200** are arranged so as to be spaced apart from each other. A half mirror may be arranged integrally with the first lens portion **16,** though the half mirror is not shown. The first laminate portion is hereinafter sometimes referred to as "optical laminate."

The first laminate portion **100** includes: the second retardation member **22;** and an adhesion layer (e.g., a pressure-sensitive adhesive layer) **41** arranged between the first lens portion **16** and the second retardation member **22,** and is arranged integrally with the first lens portion **16** via the adhesion layer **41.** The first laminate portion **100** further includes a first protective member **31** arranged on the front side of the second retardation member **22.** The first protective member **31** is laminated on the second retardation member **22** via an adhesion layer (e.g., pressure-sensitive adhesive layer) **42,** and is arranged adjacent to the second retardation member **22.** The first protective member **31** may be

positioned on the outermost surface of the first laminate portion **100.** Herein, the phrase "adjacent to" encompasses not only a case in which the components are directly next to each other but also a case in which the components are next to each other via an adhesion layer.

In the example illustrated in FIG. **2,** the second retardation member **22** includes a member (second retardation layer) **22b** whose refractive index characteristic shows the relationship of nz>nx≥ny in addition to a second λ/4 member (first retardation layer) **22a.** The second retardation member **22** has a laminated **structure** of the first retardation layer **22a** and the second retardation layer **22b.** When the member **22b** that shows the relationship of nz>nx≥ny is used, light leakage (e.g., light leakage in an oblique direction) can be prevented. As illustrated in FIG. **2,** in the second retardation member **22,** it is preferred that the second λ/4 member **22a** be positioned on the front side of the member **22b** that shows the relationship of nz>nx≥ny.

The second λ/4 member (first retardation layer) **22a** and the member (second retardation layer) **22b** that shows the relationship of nz>nx≥ny are laminated via an adhesive layer **50.** The second retardation member **22** includes the first retardation layer **22a,** the adhesive layer **50,** and the second retardation layer **22b.** When the retardation layers are laminated with the adhesive layer **50,** occurrence of breakage or cracks in the retardation layer can be suppressed. In addition, peeling between the retardation layers can be prevented. In addition, an optical laminate excellent in durability can be obtained. For example, when the thickness of at least one of the first retardation layer or the second retardation layer (e.g., the second retardation layer) is 10 um or less, there is a tendency that breakage or cracks are liable to occur.

The refractive index characteristic of the second λ/4 member preferably shows the relationship of nx>ny≥nz. The equation "ny=nz" as used herein encompasses not only a case in which the ny and the nz are completely equal to each other but also a case in which the ny and the nz are substantially equal to each other. Accordingly, the ny may be less than the nz to the extent that the effects of the present invention are not impaired. The Nz coefficient of the second λ/4 member is preferably from 0.9 to 3, more preferably from 0.9 to 2.5, still more preferably from 0.9 to 1.5, particularly preferably from 0.9 to 1.3.

The second λ/4 member is formed from any appropriate material that may satisfy the above-mentioned characteristics. The second λ/4 member may be, for example, a stretched film of a resin film or an alignment fixed layer of a liquid crystal compound.

A resin to be incorporated into the resin film is, for example, a polycarbonate-based resin, a polyester carbonate-based resin, a polyester-based resin, a polyvinyl acetal-based resin, a polyarylate-based resin, a cyclic olefin-based resin, a cellulose-based resin, a polyvinyl alcohol-based resin, a polyamide-based resin, a polyimide-based resin, a polyether-based resin, a polystyrene-based resin, or an acrylic resin. Those resins may be used alone or in combination thereof. A method for the combination is, for example, blending or copolymerization. When the second λ/4 member shows a reverse wavelength dispersion characteristic, a resin film containing a polycarbonate-based resin or a polyester carbonate-based resin (hereinafter sometimes simply referred to as "polycarbonate-based resin") may be suitably used.

Any appropriate polycarbonate-based resin may be used as the polycarbonate-based resin. For example, the polycarbonate-based resin includes a structural unit derived from a fluorene-based dihydroxy compound, a structural unit derived from an isosorbide-based dihydroxy compound, and a structural unit derived from at least one dihydroxy compound selected from the group consisting of: an alicyclic diol; an alicyclic dimethanol; di-, tri-, or polyethylene glycol; and an alkylene glycol or a spiroglycol. The polycarbonate-based resin preferably includes a structural unit derived from a fluorene-based dihydroxy compound, a structural unit derived from an isosorbide-based dihydroxy compound, and a structural unit derived from an alicyclic dimethanol and/or a structural unit derived from di-, tri-, or polyethylene glycol, and more preferably includes a structural unit derived from a fluorene-based dihydroxy compound, a structural unit derived from an isosorbide-based dihydroxy compound, and a structural unit derived from di-, tri-, or polyethylene glycol. The polycarbonate-based resin may include a structural unit derived from any other dihydroxy compound as required. The details of the polycarbonate-based resin that may be suitably used in the second λ/4 member and a method of forming the second λ/4 member are described in, for example, JP 2014-10291 A, JP 2014-26266 A, JP 2015-212816 A, JP 2015-212817 A, and JP 2015-212818 A, the descriptions of which are incorporated herein by reference.

The thickness of the second λ/4 member including the stretched film of the resin film is, for example, from 10 um to 100 μm, preferably from 10 um to 70 μm, more preferably from 20 um to 60 μm.

The alignment fixed layer of the liquid crystal compound is such a layer that the liquid crystal compound is aligned in a predetermined direction in the layer, and its alignment state is fixed. The term "alignment fixed layer" is a concept encompassing an alignment cured layer obtained by curing a liquid crystal monomer as described later. In the second λ/4 member, the molecules of a rod-shaped liquid crystal compound are typically aligned under the state of being lined up in the slow axis direction of the second λ/4 member (homogeneous alignment). Examples of the rod-shaped liquid crystal compound include a liquid crystal polymer and a liquid crystal monomer. The liquid crystal compound is preferably polymerizable. When the liquid crystal compound is polymerizable, the alignment state of the liquid crystal compound can be fixed by aligning the liquid crystal compound and then polymerizing the compound.

The alignment fixed layer of the liquid crystal compound (liquid crystal alignment fixed layer) may be formed by: subjecting the surface of a predetermined substrate to alignment treatment; applying an application liquid containing a

liquid crystal compound to the surface; aligning the liquid crystal compound in a direction corresponding to the alignment treatment; and fixing the alignment state. Any appropriate alignment treatment may be adopted as the alignment treatment. Specific examples thereof include mechanical alignment treatment, physical alignment treatment, and chemical alignment treatment. Specific examples of the mechanical alignment treatment include rubbing treatment and stretching treatment. Specific examples of the physical alignment treatment include magnetic field alignment treatment and electric field alignment treatment. Specific examples of the chemical alignment treatment include an oblique deposition method and photoalignment treatment. Any appropriate conditions may be adopted as treatment conditions for the various alignment treatments in accordance with purposes.

The alignment of the liquid crystal compound is performed through treatment at a temperature at which the liquid crystal compound shows a liquid crystal phase depending on the kind of the liquid crystal compound. When the treatment at such temperature is performed, the liquid crystal compound adopts a liquid crystal state, and the liquid crystal compound is aligned in accordance with the alignment treatment direction of the surface of the substrate.

In one embodiment, the fixation of the alignment state is performed by cooling the liquid crystal compound aligned as described above. When the liquid crystal compound is polymerizable or cross-linkable, the fixation of the alignment state is performed by subjecting the liquid crystal compound aligned as described above to polymerization treatment or cross-linking treatment.

Any appropriate liquid crystal polymer and/or liquid crystal monomer is used as the liquid crystal compound. The liquid crystal polymers and the liquid crystal monomers may each be used alone or in combination thereof. Specific examples of the liquid crystal compound and a method of producing the liquid crystal alignment fixed layer are described in, for example, JP 2006-163343 A, JP 2006-178389 A, and WO 2018/123551 A1, the descriptions of which are incorporated herein by reference.

The thickness of the second $\lambda/4$ member including the liquid crystal alignment fixed layer is, for example, from 1 um to 10 $\mu$m, preferably from 1 um to 8 $\mu$m, more preferably from 1 um to 6 $\mu$m, still more preferably from 1 um to 4 $\mu$m.

The thickness direction retardation Rth(550) of the member (second retardation layer) having a refractive index characteristic that shows the relationship of $nz>nx\geq ny$ is preferably from -260 nm to -10 nm, more preferably from -230 nm to -15 nm, still more preferably from -215 nm to -20 nm. In one embodiment, the second retardation layer is a so-called positive C-plate having a refractive index that shows the relationship of nx=ny. Herein, the equation "nx=ny" encompasses not only a case in which the nx and the ny are exactly equal to each other but also a case in which the nx and the ny are substantially equal to each other. For example, the equation "nx=ny" also encompasses a case in which Re (550) is less than 10 nm. In another embodiment, the second retardation layer has a refractive index that shows the relationship of nx>ny. In this case, the in-plane retardation Re(550) of the second retardation layer is preferably from 10 nm to 150 nm, more preferably from 10 nm to 80 nm.

The member having a refractive index characteristic that shows the relationship of $nz>nx\geq ny$ may be formed from any appropriate material. The member preferably includes a film containing a liquid crystal material fixed in homeotropic alignment. The liquid crystal material (liquid crystal compound) that can be homeotropically aligned may be a liquid crystal monomer or a liquid crystal polymer. Such liquid crystal compound and a method of forming the film are specifically, for example, a liquid crystal compound and a formation method described in paragraphs [0020] to [0042] of JP 2002-333642 A. In this case, the thickness of the member is preferably from 0.1 um to 5 $\mu$m, more preferably from 0.5 um to 4 $\mu$m.

As another preferred specific example, the member having a refractive index characteristic that shows the relationship of $nz>nx\geq ny$ may be a retardation film formed from a fumaric acid diester-based resin described in JP 2012-32784 A. In this case, the thickness of the member is preferably from 5 um to 50 $\mu$m, more preferably from 10 um to 35 $\mu$m.

The adhesive layer 50 in the second retardation member 22 may be formed from any appropriate adhesive. For example, the state of the adhesive irreversibly changes from a liquid to a solid in the course of the formation of the adhesive layer, and the adhesive has fluidity at the time of its application and has such a property as to be cured by curing treatment (e.g., irradiation with an active energy ray or heating). A curable adhesive is preferably used as the adhesive. Specifically, the adhesive layer 50 is preferably a cured layer of a resin. A UV-curable adhesive is preferably used as the curable adhesive.

The UV-curable adhesive contains, as a curable monomer, a curable monomer, such as a compound having a (meth)acryloyl group or a compound having a vinyl group. Of those, a compound having a (meth)acryloyl group is preferably used. Herein, the term "(meth)acryloyl group" refers to an acryloyl group" and/or a methacryloyl group.

The thickness of the adhesive layer in the retardation member is 1.3 um or less, preferably 1.1 um or less, more preferably 0.9 um or less. With such thickness, an optical laminate extremely excellent in smoothness can be obtained. Specifically, the adhesive may undergo curing shrinkage in the formation of the adhesive layer. The curing shrinkage may have a large influence on the smoothness of the optical laminate to be obtained. In the above-mentioned display system, an image may be enlarged in a lens unit (e.g., by a convex lens), and hence the smoothness of the optical laminate may have a large influence on viewability. According to the adhesive layer having a small thickness, the influence caused by the curing shrinkage is reduced, and hence an optical laminate excellent in smoothness can be obtained. In addition,

according to such optical laminate, significantly excellent viewability can be achieved in the above-mentioned display system. For example, a clear image free of any distortion can be achieved. Meanwhile, the thickness of the adhesive layer in the retardation member is preferably, for example, 0.5 um or more from the viewpoint of durability.

The first protective member typically includes a substrate. The thickness of the substrate is preferably from 5 um to 80 um, more preferably from 10 um to 50 μm, still more preferably from 15 um to 40 um. The surface smoothness of the substrate is preferably 0.7 arcmin or less, more preferably 0.6 arcmin or less, still more preferably 0.5 arcmin or less. The surface smoothness may be measured by focusing irradiation light on a surface of an object.

The substrate may include any appropriate film. Examples of a material serving as a main component for the film for forming the substrate include a cellulose-based resin such as triacetyl cellulose (TAC), a polyester-based resin, a polyvinyl alcohol-based resin, a polycarbonate-based resin, a polyamide-based resin, a polyimide-based resin, a polyether sulfone-based resin, a polysulfone-based resin, a polystyrene-based resin, a cycloolefin-based resin such as polynorbornene, a polyolefin-based resin, a (meth)acrylic resin, and an acetate-based resin. The term "(meth)acrylic" as used herein refers to acrylic and/or methacrylic. In one embodiment, the substrate preferably includes a (meth)acrylic resin. When the (meth)acrylic resin is adopted, a substrate excellent in smoothness (e.g., satisfying the above-mentioned surface smoothness) can be formed by extrusion molding. In addition, a protective member excellent in smoothness can be obtained.

The first protective member preferably includes a laminate film including the substrate and a surface-treated layer formed on the substrate. The thickness of the laminate film is preferably from 10 um to 80 um, more preferably from 15 um to 60 μm, still more preferably from 20 um to 45 um. The thickness of the surface-treated layer is preferably from 0.5 um to 10 μm, more preferably from 1 μm to 7 μm, still more preferably from 2 um to 5 μm.

The surface-treated layer typically includes a hard coat layer. The hard coat layer is typically formed by applying a material for forming a hard coat layer to the substrate, and curing the applied layer. The material for forming a hard coat layer typically contains a curable compound serving as a layer-forming component. A curing mechanism of the curable compound is, for example, a thermosetting type or a photocurable type. Examples of the curable compound include a monomer, an oligomer, and a prepolymer. A polyfunctional monomer or oligomer is preferably used as the curable compound. Examples of the polyfunctional monomer or oligomer include a monomer or oligomer having two or more (meth)acryloyl groups, urethane (meth)acrylate or an oligomer of urethane (meth)acrylate, an epoxy-based monomer or oligomer, and a silicone-based monomer or oligomer.

The thickness of the hard coat layer is preferably from 0.5 um to 10 μm, more preferably from 1 um to 7 μm, still more preferably from 2 um to 5 μm.

The surface-treated layer preferably includes a functional layer. The functional layer preferably functions as an antireflection layer. In a preferred embodiment, the surface-treated layer includes the hard coat layer and the antireflection layer in the stated order from the substrate side. The thickness of the functional layer is preferably from 0.05 um to 10 μm, more preferably from 0.1 um to 5 μm, still more preferably from 0.1 um to 2 μm.

The first protective member including the surface-treated layer may be arranged so that the surface-treated layer may be positioned on the front side. Specifically, the surface-treated layer may be positioned on the outermost surface of the first laminate portion. The surface-treated layer may have any appropriate function. The surface-treated layer preferably has, for example, an antireflection function from the viewpoint of suppressing light loss at an interface between the layer and air and from the viewpoint of improving the viewability. In one embodiment, the first protective member has a maximum value for a 5° specular reflectance spectrum in the wavelength range of from 420 nm to 680 nm of preferably 2.0% or less, more preferably 1.2% or less, still more preferably 1.0% or less, particularly preferably 0.8% or less. Herein, the 5° specular reflectance is measured, for example, as described below. A measurement object is bonded to a black acrylic plate with a pressure-sensitive adhesive to produce a measurement sample. The measurement may be performed by using a spectrophotometer (manufactured by Hitachi High-Technologies Corporation, product name: "U-4100") as a measurement apparatus while the incident angle of light with respect to the measurement sample is set to 5°.

The surface smoothness of the first protective member is preferably 0.5 arcmin or less, more preferably 0.4 arcmin or less. Substantially, the surface smoothness of the first protective member is, for example, 0.1 arcmin or more. The laminate smoothness of an optical laminate 100 is preferably 0.7 arcmin or less, more preferably 0.6 arcmin or less, still more preferably 0.5 arcmin or less. When the optical laminate satisfies such laminate smoothness, occurrence of diffused light is suppressed, and hence the image can be suppressed from becoming unclear. The laminate smoothness of the optical laminate **100** is, for example, 0.1 arcmin or more. The laminate smoothness may be obtained by applying irradiation light to an object and detecting the degrees of reflection and transmission of each member for forming the object (laminate).

The optical laminate **100** can have excellent durability. For example, the optical laminate **100** has a laminate smoothness of preferably 0.7 arcmin or less, more preferably 0.6 arcmin or less, still more preferably 0.5 arcmin or less after having been left for 500 hours under a temperature environment at 80°C. In addition, the optical laminate **100** has a laminate smoothness of preferably 0.7 arcmin or less, more preferably 0.6 arcmin or less, still more preferably 0.5 arcmin or less after having been left for 500 hours under a temperature environment at -40°C.

The optical laminate **100** may have a high transmittance. For example, the optical laminate 100 has a Y value of a single layer transmittance subjected to visibility correction of, for example, 90% or more, preferably 93% or more, more preferably 94% or more, still more preferably 95% or more.

The second laminate portion **200** includes: the reflection-type polarizing member **14;** and an adhesion layer (e.g., a pressure-sensitive adhesive layer) arranged between the reflection-type polarizing member **14** and the second lens portion **24.** The second laminate portion **200** further includes an absorption-type polarizing member **28** arranged between the reflection-type polarizing member **14** and the second lens portion **24** from the viewpoint of, for example, improving the viewability. The absorption-type polarizing member **28** is laminated on the front side of the reflection-type polarizing member **14** via an adhesion layer (e.g., a pressure-sensitive adhesive layer) **44.** The reflection axis of the reflection-type polarizing member **14** and the absorption axis of the absorption-type polarizing member **28** may be arranged substantially parallel to each other, and the transmission axis of the reflection-type polarizing member **14** and the transmission axis of the absorption-type polarizing member **28** may be arranged substantially parallel to each other. The reflection-type polarizing member **14** and the absorption-type polarizing member **28** are fixed to each other through lamination of the members via the adhesion layer, and hence a shift in the axial arrangement of the reflection axis of the member **14** and the absorption axis of the member **28** (the transmission axis of the member **14** and the transmission axis of the member **28**) can be prevented. In addition, an adverse effect due to an air layer that may be formed between the reflection-type polarizing member **14** and the absorption-type polarizing member **28** can be suppressed.

The second laminate portion **200** further includes a second protective member **32** arranged on a back side of the reflection-type polarizing member **14.** The second protective member **32** is laminated on the reflection-type polarizing member **14** via an adhesion layer (e.g., a pressure-sensitive adhesive layer) **43.** The second protective member **32** may be positioned on the outermost surface of the second laminate portion **200.** The first protective member **31** and the second protective member **32** are arranged to face each other via a space. The second protective member may be typically a laminate film including a substrate and a surface-treated layer as with the first protective member. In this case, the surface-treated layer may be positioned on the outermost surface of the second laminate portion. For the details of the second protective member, the same descriptions as those in the first protective member may be applied. Specifically, for the reflection characteristic of the second protective member and effects thereof, and the smoothness, thickness, and formation material thereof, the same descriptions as those in the first protective member may be applied.

In the example illustrated in FIG. **2,** the second laminate portion **200** further includes a third retardation member **30** arranged between the absorption-type polarizing member **28** and the second lens portion **24.** The third retardation member **30** is laminated on the absorption-type polarizing member **28** via an adhesion layer (e.g., a pressure-sensitive adhesive layer) **45.** In addition, the third retardation member **30** is laminated on the second lens portion **24** via an adhesion layer (e.g., a pressure-sensitive adhesive layer) **46,** and the second laminate portion **200** is arranged integrally with the second lens portion **24.** The third retardation member **30** includes, for example, a third λ/4 member. An angle formed by the absorption axis of the absorption-type polarizing member **28** and the slow axis of the third λ/4 member in the third retardation member **30** is, for example, from 40° to 50°, may be from 42° to 48°, or may be about 45°. When such member is arranged, for example, the reflection of ambient light from a second lens portion **24** side can be prevented. When the third retardation member is free of any member other than the third λ/4 member, the third retardation member may correspond to the third λ/4 member.

The above-mentioned reflection-type polarizing member can transmit polarized light (typically, linearly polarized light) parallel to its transmission axis while maintaining the polarization state of the light, and can reflect light in any other polarization state. The reflection-type polarizing member typically includes a film having a multilayer structure (sometimes referred to as "reflection-type polarizing film"). In this case, the thickness of the reflection-type polarizing member is, for example, from 10 um to 150 μm, preferably from 20 um to 100 μm, more preferably from 30 um to 60 μm.

FIG. **3** is a schematic perspective view for illustrating an example of the multilayer structure in the reflection-type polarizing film. A multilayer structure **14a** alternately includes a layer A having birefringence and a layer B substantially free of birefringence. The total number of the layers for forming the multilayer structure may be from 50 to 1,000. For example, the refractive index nx of the A layer in an x-axis direction is larger than the refractive index ny thereof in a y-axis direction, the refractive index nx of the B layer in the x-axis direction and the refractive index ny thereof in the y-axis direction are substantially identical to each other, and a difference in refractive index between the A layer and the B layer is large in the x-axis direction, and is substantially zero in the y-axis direction. As a result, the x-axis direction may serve as a reflection axis, and the y-axis direction may serve as a transmission axis. The difference in refractive index between the A layer and the B layer in the x-axis direction is preferably from 0.2 to 0.3.

The above-mentioned A layer typically includes a material that expresses birefringence by being stretched. Examples of such material include a naphthalene dicarboxylic acid polyester (e.g., polyethylene naphthalate), polycarbonate, and an acrylic resin (e.g., polymethyl methacrylate). The above-mentioned B layer typically includes a material that is substantially free from expressing birefringence even when stretched. Such material is, for example, a copolyester of naphthalene dicarboxylic acid and terephthalic acid. The above-mentioned multilayer structure may be formed by combining coextrusion and stretching. For example, the material for forming the A layer and the material for forming the B

layer are extruded, and are then multilayered (with, for example, a multiplier). Next, the resultant multilayer laminate is stretched. The x-axis direction in the illustrated example may correspond to the stretching direction.

A commercial product of the reflection-type polarizing film is, for example, a product available under the product name "DBEF" or "APF" from 3M Company, or a product available under the product name "APCF" from Nitto Denko Corporation.

The cross transmittance (Tc) of the reflection-type polarizing member (reflection-type polarizing film) may be, for example, from 0.01% to 3%. The single layer transmittance (Ts) of the reflection-type polarizing member (reflection-type polarizing film) is, for example, from 43% to 49%, preferably from 45% to 47%. The polarization degree (P) of the reflection-type polarizing member (reflection-type polarizing film) may be, for example, from 92% to 99.99%.

The cross transmittance, the single layer transmittance, and the polarization degree described above may each be measured with, for example, a UV-visible spectrophotometer. The polarization degree P may be determined as follows: the single layer transmittance Ts, the parallel transmittance Tp, and the cross transmittance Tc are measured with the UV-visible spectrophotometer; and the degree is determined from the Tp and Tc thus obtained by using the following equation. The Ts, the Tp, and the Tc are each a Y value measured with the two-degree field of view (C light source) of JIS Z 8701 and subjected to visibility correction.

$$\text{Polarization degree P }(\%)=\{(Tp-Tc)/(Tp+Tc)\}^{1/2}\times 100$$

The above-mentioned absorption-type polarizing member may typically include a resin film containing a dichroic substance (sometimes referred to as "absorption-type polarizer"). The thickness of the absorption-type polarizer is, for example, 1 um or more and 20 um or less, and may be 2 um or more and 15 um or less, may be 12 um or less, may be 10 um or less, may be 8 um or less, or may be 5 um or less.

The above-mentioned absorption-type polarizer may be produced from a single-layer resin film, or may be produced by using a laminate of two or more layers.

When the absorption-type polarizer is produced from the single-layer resin film, the absorption-type polarizer may be obtained by, for example, subjecting a hydrophilic polymer film, such as a polyvinyl alcohol (PVA)-based film, a partially formalized PVA-based film, or an ethylene-vinyl acetate copolymer-based partially saponified film, to dyeing treatment with a dichroic substance, such as iodine or a dichroic dye, stretching treatment, or the like. Of such polarizers, an absorption-type polarizer obtained by dyeing a PVA-based film with iodine and uniaxially stretching the dyed film is preferred.

The above-mentioned dyeing with iodine is performed by, for example, immersing the PVA-based film in an aqueous solution of iodine. The stretching ratio of the above-mentioned uniaxial stretching is preferably from 3 times to 7 times. The stretching may be performed after the dyeing treatment, or may be performed while the dyeing is performed. Alternatively, the dyeing may be performed after the stretching. The PVA-based film is subjected to swelling treatment, cross-linking treatment, washing treatment, drying treatment, or the like as required.

When the absorption-type polarizer is produced by using the above-mentioned laminate of two or more layers, the laminate is, for example, a laminate of a resin substrate and a PVA-based resin layer (PVA-based resin film) laminated on the resin substrate or a laminate of a resin substrate and a PVA-based resin layer formed on the resin substrate through application. The absorption-type polarizer obtained by using the laminate of the resin substrate and the PVA-based resin layer formed on the resin substrate through application may be produced, for example, by: applying a PVA-based resin solution to the resin substrate; drying the solution to form the PVA-based resin layer on the resin substrate, to thereby provide the laminate of the resin substrate and the PVA-based resin layer; and stretching and dyeing the laminate to turn the PVA-based resin layer into the absorption-type polarizer. In this embodiment, a polyvinyl alcohol-based resin layer containing a halide and a polyvinyl alcohol-based resin is preferably formed on one side of the resin substrate. The stretching typically includes stretching the laminate under a state in which the laminate is immersed in an aqueous solution of boric acid. Further, the stretching may further include in-air stretching of the laminate at high temperature (e.g., 95°C or more) before the stretching in the aqueous solution of boric acid as required. In addition, in this embodiment, the laminate is preferably subjected to drying shrinkage treatment, which includes heating the laminate, while conveying the laminate in its lengthwise direction, to shrink the laminate by 2% or more in its widthwise direction. The production method of this embodiment typically includes subjecting the laminate to in-air auxiliary stretching treatment, dyeing treatment, underwater stretching treatment, and drying shrinkage treatment in the stated order. When the auxiliary stretching is introduced, even in the case where PVA is applied onto a thermoplastic resin, the crystallinity of PVA can be improved, and hence high optical characteristics can be achieved. In addition, when the alignment property of PVA is improved in advance simultaneously with the crystallinity improvement, problems, such as a reduction in alignment property of PVA and the dissolution thereof, can be prevented at the time of the immersion of the laminate in water in the subsequent dyeing step or stretching step, and hence high optical characteristics can be achieved. Further, in the case where the PVA-based resin layer is immersed in a liquid, the disturbance of the alignment of the molecules of polyvinyl alcohol and reductions in

alignment properties thereof can be suppressed as compared to those in the case where the PVA-based resin layer is free of any halide. Thus, the optical characteristics of the absorption-type polarizer to be obtained through treatment steps performed by immersing the laminate in a liquid, such as the dyeing treatment and the underwater stretching treatment, can be improved. Further, the optical characteristics can be improved by shrinking the laminate in its widthwise direction through the drying shrinkage treatment. The resultant laminate of the resin substrate and the absorption-type polarizer may be used as it is (that is, the resin substrate may be used as a protective layer for the absorption-type polarizer), or may be used by laminating any appropriate protective layer in accordance with purposes on the peeled surface on which the resin substrate has been peeled from the laminate of the resin substrate and the absorption-type polarizer, or on a surface on the side opposite to the peeled surface. The details of such method of producing the absorption-type polarizer are described in, for example, JP 2012-73580 A and JP 6470455 B1, the descriptions of which are incorporated herein by reference in their entirety.

The cross transmittance (Tc) of the absorption-type polarizing member (absorption-type polarizer) is preferably 0.5% or less, more preferably 0.1% or less, still more preferably 0.05% or less. The single layer transmittance (Ts) of the absorption-type polarizing member (absorption-type polarizer) is, for example, from 41.0% to 45.0%, preferably 42.0% or more. The polarization degree (P) of the absorption-type polarizing member (absorption-type polarizer) is, for example, from 99.0% to 99.997%, preferably 99.9% or more.

The in-plane retardation Re(550) of the third λ/4 member is, for example, from 100 nm to 190 nm, and may be from 110 nm to 180 nm, may be from 130 nm to 160 nm, or may be from 135 nm to 155 nm. The third λ/4 member preferably shows such a reverse wavelength dispersion characteristic that its retardation value increases with an increase in wavelength of measurement light. The ratio "Re(450)/Re(550)" of the third λ/4 member is, for example, 0.75 or more and less than 1, and may be 0.8 or more and 0.95 or less. The refractive index characteristic of the third λ/4 member preferably shows the relationship of $nx>ny \geq nz$. The Nz coefficient of the third λ/4 member is preferably from 0.9 to 3, more preferably from 0.9 to 2.5, still more preferably from 0.9 to 1.5, particularly preferably from 0.9 to 1.3.

The third λ/4 member is formed from any appropriate material that may satisfy the above-mentioned characteristics. The third λ/4 member may be, for example, a stretched film of a resin film or an alignment fixed layer of a liquid crystal compound. The same description as that of the above-mentioned second λ/4 member may be applied to the third λ/4 member including the stretched film of the resin film or the alignment fixed layer of the liquid crystal compound. The second λ/4 member and the third λ/4 member may be members having the same configuration (e.g., a formation material, a thickness, or an optical characteristic), or may be members having different configurations.

The thickness of each of the pressure-sensitive adhesive layers to be used for the lamination of the respective members may be set to any appropriate thickness. The thickness of each of the pressure-sensitive adhesive layers to be used for the lamination of the respective members is preferably 3 um or more and 20 um or less, and may be 15 um or less, may be 12 um or less, or may be 7 pm or less. With such thickness, the degree of unevenness of the surface of the pressure-sensitive adhesive layer can be suppressed, and the laminate portion can be excellent in smoothness.

## Examples

The present invention is specifically described below by way of Examples. However, the present invention is not limited to these Examples. A thickness, a retardation value, and a surface smoothness are values measured by the following measurement methods. In addition, the terms "part(s)" and "%" are by weight unless otherwise stated.

### <Thickness>

A thickness of 10 um or less was measured with a scanning electron microscope (manufactured by JEOL Ltd., product name: "JSM-7100F"). A thickness of more than 10 um was measured with a digital micrometer (manufactured by Anritsu Corporation, product name: "KC-351C").

### <Retardation Value>

Retardation values at respective wavelengths at 23°C were measured with a Mueller matrix polarimeter (manufactured by Axometrics, Inc., product name: "AxoScan").

### <Surface Smoothness>

A surface smoothness was measured with a scanning white-light interferometer (manufactured by Zygo Corporation, product name: "NewView 9000"). Specifically, a measurement sample was placed on a measurement table with a vibration isolation table to generate interference fringes with single white LED lighting. The sample was scanned with an interference objective lens (magnification: 1.4) having a reference surface in a Z-direction (thickness direction). Thus,

the smoothness (surface smoothness) of the measurement object on its outermost surface in the range of a field of view of 12.4 mm□ was selectively acquired.

When the measurement object is a pressure-sensitive adhesive layer, the pressure-sensitive adhesive layer was bonded to MICRO SLIDE GLASS (manufactured by Matsunami Glass Ind., Ltd., product name: "S200200"), followed by measurement of the smoothness of an exposed pressure-sensitive adhesive surface. When the measurement object is a film, an acrylic pressure-sensitive adhesive layer with little unevenness, the acrylic pressure-sensitive adhesive layer having a thickness of 5 μm, was formed on the above-mentioned glass, and the film serving as the measurement object was laminated on a pressure-sensitive adhesive surface thereof so that foreign matter, an air bubble, or a deformation streak did not enter, followed by measurement of the smoothness of a surface on a side opposite to the pressure-sensitive adhesive layer. The surface smoothness of the acrylic pressure-sensitive adhesive layer with little unevenness, the acrylic pressure-sensitive adhesive layer having a thickness of 5 um, was 0.30 arcmin.

With regard to an analysis, a value obtained by doubling an indicator of an angle "Slope magnitude RMS" (corresponding to 2σ) was defined as a surface smoothness (unit: arcmin).

[Example 1]

(Production of λ/4 Member)

Polymerization was performed with a batch polymerization apparatus formed of two vertical reactors each including a stirring blade and a reflux condenser controlled to 100°C. 29.60 Parts by weight (0.046 mol) of bis[9-(2-phenoxycarbonylethyl)fluoren-9-yl]methane, 29.21 parts by weight (0.200 mol) of isosorbide (ISB), 42.28 parts by weight (0.139 mol) of spiroglycol (SPG), 63.77 parts by weight (0.298 mol) of diphenyl carbonate (DPC), and $1.19\times10^{-2}$ part by weight ($6.78\times10^{-5}$ mol) of calcium acetate monohydrate serving as a catalyst were loaded into the batch polymerization apparatus. After the inside of each of the reactors had been purged with nitrogen under reduced pressure, the inside was warmed with a heat medium, and stirring was started at the time point when the internal temperature became 100°C. 40 Minutes after the start of the temperature increase, the internal temperature was caused to reach 220°C, and such control that the temperature was held was performed. At the same time, a pressure reduction was started, and a pressure in the reactor was set to 13.3 kPa in 90 minutes after the temperature had reached 220°C. Phenol vapor produced as a by-product along with a polymerization reaction was introduced into the reflux condenser at 100°C, a monomer component present in a trace amount in the phenol vapor was returned to the reactor, and the phenol vapor that did not condense was introduced into a condenser at 45°C and recovered. Nitrogen was introduced into the first reactor to return the pressure therein to the atmospheric pressure once, and then an oligomerized reaction liquid in the first reactor was transferred to the second reactor. Next, a temperature increase and a pressure reduction in the second reactor were started, and the internal temperature and the pressure were set to 240°C and 0.2 kPa, respectively in 50 minutes. After that, the polymerization was advanced until predetermined stirring power was obtained. At the time point when the predetermined power was achieved, nitrogen was introduced into the reactor to return the pressure, and the produced polyester carbonate-based resin was extruded into water, followed by the cutting of a strand. Thus, a pellet was obtained.

The resultant polyester carbonate-based resin (pellet) was dried in a vacuum at 80°C for 5 hours, and then an elongate resin film having a thickness of 135 um was produced from the resin with a film-forming apparatus including a single-screw extruder (manufactured by Toshiba Machine Co., Ltd., cylinder set temperature: 250°C), a T-die (width: 200 mm, set temperature: 250°C), a chill roll (set temperature: from 120°C to 130°C), and a winding machine. The resultant elongate resin film was stretched in its widthwise direction at a stretching temperature of 143°C and a stretching ratio of 2.8 times to provide a stretched film having a thickness of 47 um. The resultant stretched film had an Re(550) of 143 nm, a ratio "Re(450)/Re(550)" of 0.86, and an Nz coefficient of 1.12.

(Formation of Positive C-plate)

20 Parts by weight of a side chain-type liquid crystal polymer represented by the following chemical formula (1) (numbers 65 and 35 in the formula each represent the mole percent of a monomer unit, and the polymer is represented in a block polymer form for convenience: weight-average molecular weight: 5,000), 80 parts by weight of a polymerizable liquid crystal showing a nematic liquid crystal phase (manufactured by BASF SE: product name: Paliocolor LC242), and 5 parts by weight of a photopolymerization initiator (manufactured by Ciba Specialty Chemicals: product name: IRGACURE 907) were dissolved in 200 parts by weight of cyclopentanone to prepare a liquid crystal application liquid. Then, the application liquid was applied to a PET substrate subjected to vertical alignment treatment with a bar coater, and was then dried by heating at 80°C for 4 minutes so that the liquid crystal was aligned. UV light was applied to the liquid crystal layer to cure the liquid crystal layer. Thus, a positive C-plate having a thickness of 4 um and an Rth(550) of -100 nm was formed on the substrate.

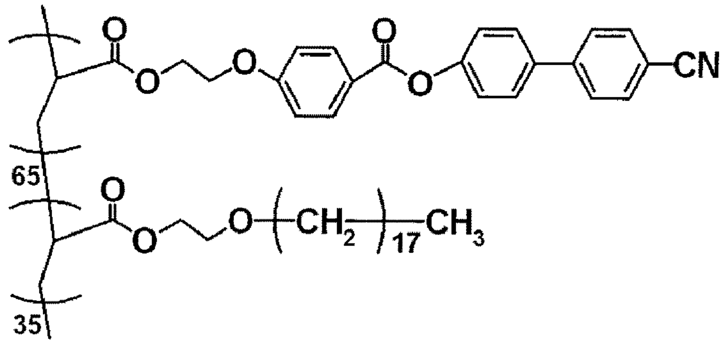

· · · (1)

(Production of Protective Member)

A material for forming a hard coat layer to be described below was applied to an acrylic film having a lactone ring structure (thickness: 40 um, surface smoothness: 0.45 arcmin). The resultant was heated at 90°C for 1 minute. The applied layer after the heating was irradiated with UV light at an integrated light quantity of 300 mJ/cm$^2$ with a high-pressure mercury lamp so that the applied layer was cured. Thus, an acrylic film (thickness: 44 μm, surface smoothness on the hard coat layer side: 0.4 arcmin) having a hard coat layer having a thickness of 4 um formed thereon was produced.

Next, an application liquid A for forming an antireflection layer to be described below was applied onto the above-mentioned hard coat layer with a wire bar. The applied application liquid was dried by heating at 80°C for 1 minute to form a coating film. The coating film after the drying was irradiated with UV light at an integrated light quantity of 300 mJ/cm$^2$ with a high-pressure mercury lamp so that the coating film was cured. Thus, an antireflection layer A having a thickness of 140 nm was formed.

Subsequently, an application liquid B for forming an antireflection layer to be described below was applied onto the antireflection layer A with a wire bar. The applied application liquid was dried by heating at 80°C for 1 minute to form a coating film. The coating film after the drying was irradiated with UV light at an integrated light quantity of 300 mJ/cm$^2$ with a high-pressure mercury lamp so that the coating film was cured. Thus, an antireflection layer B having a thickness of 105 nm was formed.

Thus, a protective member (thickness: 44 μm, surface smoothness on the antireflection layer side: 0.4 arcmin) was obtained.

(Material for forming Hard Coat Layer)

50 Parts of a urethane acrylic oligomer (manufactured by Shin-Nakamura Chemical Co., Ltd., "NK Oligo UA-53H"), 30 parts of a polyfunctional acrylate containing pentaerythritol triacrylate as a main component (manufactured by Osaka Organic Chemical Industry Ltd., product name: "Viscoat #300"), 20 parts of 4-hydroxybutyl acrylate (manufactured by Osaka Organic Chemical Industry Ltd.), 1 part of a leveling agent (manufactured by DIC Corporation, "GRANDIC PC4100"), and 3 parts of a photopolymerization initiator (manufactured by Ciba Japan K.K., "IRGACURE 907") were mixed. The mixture was diluted with methyl isobutyl ketone so as to have a solid content concentration of 50%. Thus, a material for forming a hard coat layer was prepared.

(Application Liquid A for forming Antireflection Layer)

100 Parts by weight of a polyfunctional acrylate (manufactured by Arakawa Chemical Industries, Ltd., product name: "OPSTAR KZ6728", solid content: 20 wt%), 3 parts by weight of a leveling agent (manufactured by DIC Corporation, "GRANDIC PC4100"), and 3 parts by weight of a photopolymerization initiator (manufactured by BASF SE, product name: "OMNIRAD 907", solid content: 100 wt%) were mixed. Butyl acetate was used as a diluting solvent to adjust the solid content of the mixture to 12 wt%, followed by stirring. Thus, an application liquid A for forming an antireflection layer was prepared.

(Application Liquid B for forming Antireflection Layer)

100 Parts by weight of a polyfunctional acrylate containing pentaerythritol triacrylate as a main component (manufactured by Osaka Organic Chemical Industry Ltd., product name: "Viscoat #300", solid content: 100 wt%), 150 parts by weight of hollow nano-silica particles (manufactured by JGC Catalysts and Chemicals Ltd., product name: "THRULYA 5320", solid content: 20 wt%, weight-average particle diameter: 75 nm), 50 parts by weight of solid nano-silica particles (manufactured by Nissan Chemical Corporation, product name: "MEK-2140Z-AC", solid content: 30 wt%,

weight-average particle diameter: 10 nm), 12 parts by weight of a fluorine element-containing additive (manufactured by Shin-Etsu Chemical Co., Ltd., product name: "KY-1203", solid content: 20 wt%), and 3 parts by weight of a photopolymerization initiator (manufactured by BASF SE, product name: "OMNIRAD 907", solid content: 100 wt%) were mixed. A mixed solvent obtained by mixing tertiary butyl alcohol (TBA), methyl isobutyl ketone (MIBK), and propylene glycol monomethyl ether acetate (PMA) at a weight ratio of 60:25:15 was added as a diluting solvent to the mixture so that an entire solid content became 4 wt%. The resultant mixture was stirred to prepare an application liquid B for forming an antireflection layer.

(Preparation of Adhesive)

62 Parts by weight of hydroxyethylacrylamide (manufactured by Kohjin Co., Ltd., product name: "HEAA"), 25 parts by weight of acryloylmorpholine (manufactured by Kohjin Co., Ltd., product name: "ACMO"), 7 parts by weight of PEG400# diacrylate (manufactured by Kyoeisha Chemical Co., Ltd., product name: "LIGHT ACRYLATE 9EG-A"), 3 parts by weight of a product available under the product name "IRGACURE 907" from BASF SE, and 3 parts by weight of a product available under the product name "KAYACURE DETX-S" from Nippon Kayaku Co., Ltd. were mixed for 60 minutes to prepare an adhesive.

(Production of Optical Laminate)

The above-mentioned adhesive was applied to the above-mentioned λ/4 member (stretched film) so that its thickness after curing became 0.6 um, and the above-mentioned positive C-plate was bonded thereto. Thus, a retardation member was obtained.

The above-mentioned protective member (acrylic film having formed thereon a hard coat layer and an antireflection layer) was bonded to the λ/4 member side of the resultant retardation member via a pressure-sensitive adhesive layer having a thickness of 12 um and a surface smoothness of 0.25 arcmin. In this case, the bonding was performed so that the acrylic film serving as the protective member was positioned on the λ/4 member side.

Next, a pressure-sensitive adhesive layer having a thickness of 12 um and a surface smoothness of 0.25 arcmin was formed on the positive C-plate side of the retardation member to provide an optical laminate.

[Example 2]

An optical laminate was obtained in the same manner as in Example 1 except that the adhesive was applied to the λ/4 member so that its thickness after curing became 0.9 um, and the positive C-plate was bonded thereto.

[Example 3]

An optical laminate was obtained in the same manner as in Example 1 except that the adhesive was applied to the λ/4 member so that its thickness after curing became 1.3 um, and the positive C-plate was bonded thereto.

[Comparative Example 1]

An optical laminate was obtained in the same manner as in Example 1 except that the adhesive was applied to the λ/4 member so that its thickness after curing became 1.5 um, and the positive C-plate was bonded thereto.

[Comparative Example 2]

An optical laminate was obtained in the same manner as in Example 1 except that the adhesive was applied to the λ/4 member so that its thickness after curing became 1.9 um, and the positive C-plate was bonded thereto.

[Comparative Example 3]

An optical laminate was obtained in the same manner as in Example 1 except that a pressure-sensitive adhesive (thickness: 5 um) was used instead of the adhesive when the positive C-plate was bonded to the λ/4 member.

The optical laminate obtained in each of Examples and Comparative Examples was subjected to the following evaluations. The results of the evaluations are shown in Table 1.

(1) Laminate Smoothness

A laminate smoothness was measured with a phase-shifting laser interferometer (manufactured by Zygo Corporation, product name: "DynaFiz"). Specifically, the optical laminate was laminated on MICRO SLIDE GLASS (manufactured by Matsunami Glass Ind., Ltd., product name: "S200200") so that foreign matter, an air bubble, or a deformation streak did not enter. Next, defoaming was performed with a pressurization defoaming apparatus (autoclave) in order to remove the influence of fine air bubbles. Defoaming conditions were set to 50°C, 0.5 MPa, and 30 minutes. After the defoaming, the resultant was allowed to cool at room temperature for 30 minutes or more to provide a measurement sample.

The measurement sample was placed on a measurement table with a vibration isolation table, and laser having a single wavelength (wavelength: 633 nm) was used to interfere with a reference device having a guaranteed flatness. Thus, a relative displacement in a predetermined region (30 mmφ circle) was measured. With regard to an analysis, a value obtained by doubling an indicator of an angle "Slope magnitude RMS" (corresponding to 2σ) obtained by extracting from a value at a frequency of from 0.1/mm to 1/mm was defined as "laminate smoothness" (unit: arcmin).

(2) Appearance

The appearance (lens-transmitted light) of the optical laminate was evaluated with an optical lens (manufactured by Thorlabs, Inc., product name: "LA1145") and a point light source (manufactured by Hamamatsu Photonics K.K., model number: "L8425-01") .

Specifically, the optical laminate cut into a 45 mmφ circular shape was laminated on the flat side of the optical lens so that foreign matter, an air bubble, or a deformation streak did not enter a surface. Next, defoaming was performed with a pressurization defoaming apparatus (autoclave) in order to remove the influence of fine air bubbles. Defoaming conditions were set to 50°C, 0.5 MPa, and 30 minutes. After the defoaming, the resultant was allowed to cool at room temperature for 30 minutes or more to provide a measurement sample.

The point light source, the optical lens (measurement sample), and a screen were arranged in this order, and the appearance was evaluated by projecting light from the point light source on the screen through the optical lens. In this case, the optical lens was held with a holder at a position where the light from the point light source entered from the convex side of the lens. A distance from the point light source to the screen was set to 1,050 mm, and a distance from the optical lens to the screen was set to 130 mm.

The appearance was evaluated by ten evaluators as follows: the light projected on the screen through the optical lens was visually observed; and the presence or absence of corrugation or waviness was judged. The numbers of evaluators who judged corrugation or waviness to be absent are shown in Table 1.

(3) Durability

The optical laminate was subjected to a thermal shock test with a thermal shock chamber (manufactured by Espec Corp., product name: "TSA-303EL-W").

An optical laminate cut into a 45 mmφ circular shape with a laser processing machine was bonded to a glass plate. After that, the resultant was left under a temperature environment at -40°C for 0.5 hour, and was then left under a temperature environment at 85°C for 0.5 hour. In this case, a time required for each of temperature increase and temperature decrease was set to 6 minutes or less. The operation was repeated 100 times in total. After that, the appearance of the optical laminate was visually observed, and the presence or absence of a crack or peeling was recognized.

(Evaluation Criteria)

- ·Satisfactory: No crack or peeling is observed.
- ·Poor: A crack and/or peeling is observed.

(4) Transmittance

The single layer transmittance Ts of the optical laminate was measured with a UV-visible spectrophotometer (manufactured by JASCO Corporation, V-7100). The Ts is a Y value measured with the two-degree field of view (C light source) of JIS Z 8701 and subjected to visibility correction. The optical laminate was subjected to the measurement under the state of not being bonded to a substrate such as glass.

Table 1

| | Example 1 | Example 2 | Example 3 | Comparative Example 1 | Comparative Example 2 | Comparative Example 3 |
|---|---|---|---|---|---|---|
| Thickness of adhesive layer (μm) | 0.6 | 0.9 | 1.3 | 1.5 | 1.9 | - |
| Thickness of pressure-sensitive adhesive layer (μm) | - | - | - | - | - | 5 |
| Laminate smoothness (arcmin) | 0.5 | 0.6 | 0.7 | 0.9 | 1.0 | 0.4 |
| Appearance | 10/10 | 10/10 | 8/10 | 5/10 | 0/10 | 10/10 |
| Durability | Satisfactory | Satisfactory | Satisfactory | Satisfactory | Satisfactory | Poor |
| Single layer transmittance Y (%) | 95.0 | 95.3 | 95.2 | 95.2 | 95.0 | 95.0 |

In the evaluation of durability, in Comparative Example 3, cracks were observed in the positive C-plate having a thickness smaller than that of the λ/4 member. The length of each of the cracks was 10 mm or more, and a plurality of cracks occurred from an end portion of the sample, and were able to be visually observed.

Meanwhile, in the case where the optical laminate of Example 1 was left under a temperature environment at 80°C for 500 hours or under a temperature environment at -40°C for 500 hours, and was then subjected to the various evaluations described above, the same results as those in the case where such temperature treatment was not performed (results shown in Table 1) were obtained.

The present invention is not limited to the above-mentioned embodiments, and various modifications may be made thereto. For example, the configurations described in the above-mentioned embodiments may each be replaced by substantially the same configuration, a configuration having the same action and effect, or a configuration that can achieve the same object.

Industrial Applicability

The optical laminate according to the embodiment of the present invention may be used in, for example, a display body such as a pair of VR goggles.

Reference Signs List

**2** display system, **4** lens unit, **12** display element, **14** reflection-type polarizing member, **16** first lens portion, **18** half mirror, **20** first retardation member, **22** second retardation member, **24** second lens portion, **28** absorption-type polarizing member, **30** third retardation member, **31** first protective member, **32** second protective member, **41** adhesion layer, **42** adhesion layer, **43** adhesion layer, **44** adhesion layer, **45** adhesion layer, **46** adhesion layer, **50** adhesive layer, 100 first laminate portion (optical laminate), **200** second laminate portion.

## Claims

**1.** An optical laminate, comprising:

a laminate film including a substrate and a surface-treated layer; and
a retardation member,
wherein the substrate of the laminate film and the retardation member are arranged adjacent to each other,
wherein the retardation member includes a first retardation layer, an adhesive layer, and a second retardation layer in the stated order, and
wherein the adhesive layer has a thickness of 0.5 um or more and 1.3 μm or less.

**2.** The optical laminate according to claim 1, wherein the optical laminate has a laminate smoothness of 0.7 arcmin or less.

**3.** The optical laminate according to claim 1, wherein the adhesive layer is a cured layer of a resin.

**4.** The optical laminate according to claim 1, wherein the laminate film has a surface smoothness of 0.5 arcmin or less.

**5.** The optical laminate according to claim 1, wherein the substrate of the laminate film contains a (meth)acrylic resin.

**6.** The optical laminate according to claim 1, wherein the surface-treated layer of the laminate film has an antireflection function.

**7.** The optical laminate according to claim 1, wherein the first retardation layer shows a refractive index characteristic of $nx>ny\geq nz$ and satisfies a relationship of $Re(450)<Re(550)<Re(650)$ where Re(450) represents an in-plane retardation measured at 23°C with light having a wavelength of 450 nm, Re(550) represents an in-plane retardation measured at 23°C with light having a wavelength of 550 nm, and Re(650) represents an in-plane retardation measured at 23°C with light having a wavelength of 650 nm.

**8.** The optical laminate according to claim 1, wherein the second retardation layer shows a refractive index characteristic of $nz>nx\geq ny$.

**9.** The optical laminate according to claim 1, wherein the optical laminate has a Y value of a single layer transmittance subjected to visibility correction of 93% or more.

**10.** A lens unit to be used in a display system configured to display an image to a user, the lens unit comprising:

a reflection-type polarizing member configured to reflect light, which has been emitted toward a front side from a display surface of a display element configured to display the image, and has passed through a polarizing member and a first $\lambda/4$ member;
a first lens portion arranged on an optical path between the display element and the reflection-type polarizing member;
a half mirror arranged between the display element and the first lens portion, the half mirror being configured to transmit the light emitted from the display element and to reflect the light reflected by the reflection-type polarizing member toward the reflection-type polarizing member;
a second lens portion arranged on the front side of the reflection-type polarizing member; and
the optical laminate of any one of claims 1 to 9 arranged on an optical path between the half mirror and the reflection-type polarizing member.

**11.** A display method, comprising the steps of:

passing light representing an image, which has been emitted through a polarizing member and a first $\lambda/4$ member, through a half mirror and a first lens portion;
passing the light, which has passed through the half mirror and the first lens portion, through the optical laminate of any one of claims 1 to 9;
reflecting the light, which has passed through the optical laminate, toward the half mirror with a reflection-type polarizing member;
enabling the light, which has been reflected by the reflection-type polarizing member and the half mirror, to penetrate through the reflection-type polarizing member with the optical laminate; and
passing the light, which has penetrated through the reflection-type polarizing member, through a second lens portion.

FIG. 1

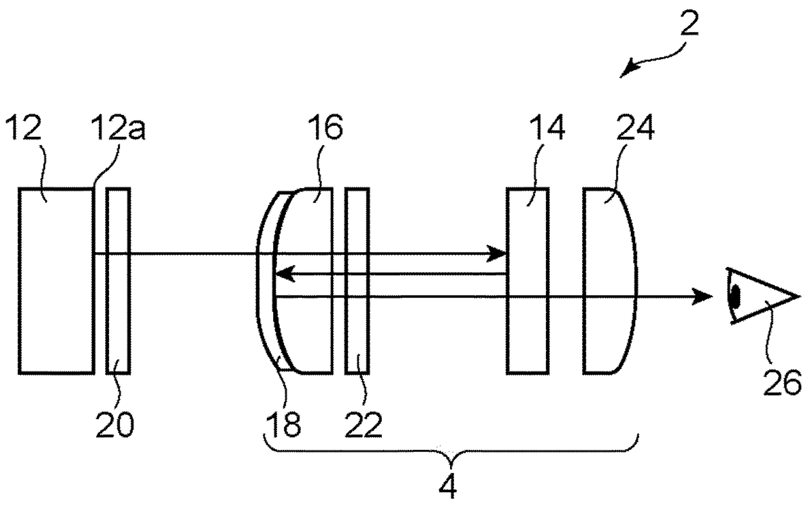
2
12
12a
16
14
24
26
20
18
22
4

FIG. 2

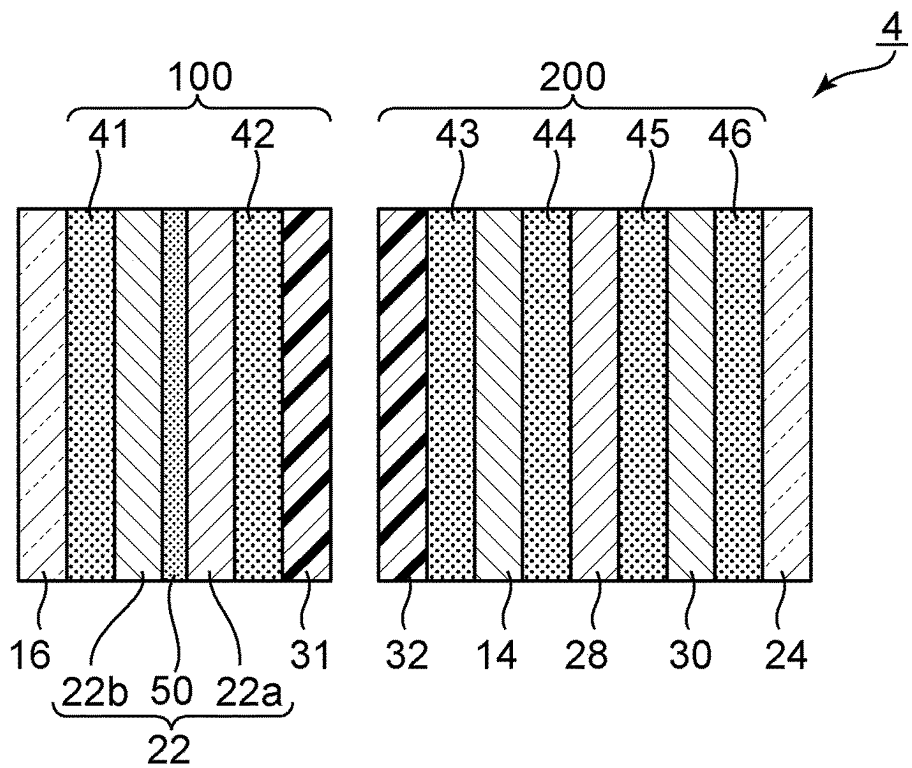
4
100
200
41
42
43
44
45
46
16
22b
50
22a
31
32
14
28
30
24
22

FIG. 3

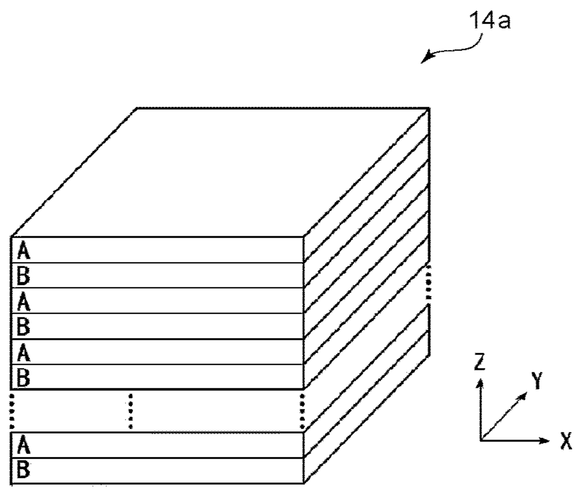

## INTERNATIONAL SEARCH REPORT

International application No.
**PCT/JP2023/008814**

### A. CLASSIFICATION OF SUBJECT MATTER

***G02B 27/02***(2006.01)i; ***G02B 5/30***(2006.01)i
FI: G02B27/02 Z; G02B5/30

According to International Patent Classification (IPC) or to both national classification and IPC

### B. FIELDS SEARCHED

Minimum documentation searched (classification system followed by classification symbols)

G02B27/02; G02B5/30; G02F1/13; G02F1/1335; G02F1/13357; G02F1/13363

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2003-337221 A (NITTO DENKO CORP) 28 November 2003 (2003-11-28) paragraphs [0015]-[0017], [0054]-[0056], [0063]-[0066], fig. 1 | 1-11 |
| A | JP 2005-49652 A (TDK CORP) 24 February 2005 (2005-02-24) claims 8-9, paragraphs [0031]-[0032], [0075] | 1-11 |
| A | JP 2005-134713 A (KONICA MINOLTA OPTO INC) 26 May 2005 (2005-05-26) paragraphs [0002]-[0005] | 4 |
| A | WO 2021/145446 A1 (FUJIFILM CORPORATION) 22 July 2021 (2021-07-22) entire text, all drawings | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 May 2023** | **23 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/008814**

| Patent document cited in search report | Publication date (day/month/year) | Patent family member(s) | Publication date (day/month/year) |
| --- | --- | --- | --- |
| JP 2003-337221 A | 28 November 2003 | (Family: none) | |
| JP 2005-49652 A | 24 February 2005 | (Family: none) | |
| JP 2005-134713 A | 26 May 2005 | (Family: none) | |
| WO 2021/145446 A1 | 22 July 2021 | US 2022/0373729 A1<br>entire text, all drawings<br>CN 114945856 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021103286 A
- JP 2014010291 A
- JP 2014026266 A
- JP 2015212816 A
- JP 2015212817 A
- JP 2015212818 A
- JP 2006163343 A
- JP 2006178389 A
- WO 2018123551 A1
- JP 2002333642 A
- JP 2012032784 A
- JP 2012073580 A
- JP 6470455 B